# EUROPÄISCHE PATENTSCHRIFT

(11) **EP 3 504 537 B1**
(45) Veröffentlichungstag und Bekanntmachung des Hinweises auf die Patenterteilung: **15.12.2021**
(21) Anmeldenummer: 17754339.4
(22) Anmeldetag: 16.08.2017
(51) Int. Cl.: G01N 21/64, G01J 3/02

(54) **VORRICHTUNG ZUR FLUORESZENZMESSUNG MITTLES LEITERPLATTE UND DARAUF BEFESTIGTER LICHTQUELLE SOWIE DETEKTOR, WOBEI DIE LEITERPLATTE EINEN SCHLITZ ZUR UNTERDRÜCKUNG VON LICHTLEITUNG AUFWEIST**
DEVICE FOR MEASURING FLUORESCENCE USING A PRINTED CIRCUIT BOARD WITH MOUNTED LIGHT SOURCE AND DETECTOR, WHEREIN THE PRINTED CIRCUIT BOARD CONTAINS A SLIT FOR SUPPRESSING CONDUCTION OF LIGHT
DISPOSITIF POUR MESURER LA FLUORESCENCE UTILISANT UNE CARTE IMPRIMÉE AVEC SOURCE DE LUMIÈRE ET CAPTEUR ATTACHÉS, LA CARTE IMPRIMÉE COMPRENANT UNE FISSURE POUR SUPPRIMER LA CONDUCTION DE LUMIÈRE

(30) Priorität: 23.08.2016 DE 102016115607
(43) Veröffentlichungstag der Anmeldung: 03.07.2019
(73) Patentinhaber: B. Braun Melsungen AG, 34212 Melsungen (DE)
(72) Erfinder: TOMBERGER, Georg, 8010 Graz (AT); SCHMID, Günter, 82178 Puchheim München (DE); HÖRNIG, Sebastian, 82178 Puchheim München (DE)
(74) Vertreter: Winter, Brandl - Partnerschaft mbB
(86) Internationale Anmeldenummer: PCT/EP2017/070712
(87) Internationale Veröffentlichungsnummer: WO 2018/036874

(56) Entgegenhaltungen:
- WO-A1-2008/105025
- JP-A- 2000 270 156
- US-A1- 2004 206 916
- US-A1- 2015 182 967
- US-A1- 2016 240 721
- US-B1- 6 194 698

## Beschreibung

Die vorliegende Erfindung betrifft ein Verfahren und eine Wandlervorrichtung für ein Messsystem zur Messung von Fluidparametern (wie bspw. Blutparametern) auf fluoreszenzoptischer Basis, sowie ein Herstellungsverfahren für die Wandlervorrichtung.

### Hintergrund der Erfindung

Bei der physiologischen Messtechnik zur Messung von Blutparameteren wie bspw. Blutglukose mit Hilfe eines Messsystems auf fluoreszenzoptischer Basis ist eine Weiterentwicklung zur Regelung der Blutglukosekonzentration von Intensivpatienten erwünscht. Bei solchen Systemen kann die Messung der Blutglukosekonzentration bspw. durch ein externes Gerät (z.B. Point-of-Care Messgerät, Blutgasanalyzer, Laboranalyzer) erfolgen. Dabei hat die Weiterentwicklung insbesondere zum Ziel, die Messfunktion zu integrieren. Das Messsystem kann gebildet sein aus einen Einmalartikel, der vom Fluid (z.B. Blut bzw. Spüllösung) durchströmt wird und eine mit diesem Fluid in Kontakt stehenden Fluoreszenzquelle (z.B. ein Fluorophor) enthält, sowie einem wiederverwendbaren Teil, welcher die optoelektronischen und elektronischen Elemente (Strahlungsquelle, Detektor) enthält und mit dem Einmalartikel lösbar verbunden wird.

Bei der Messung von physiologischen Parametern mittels fluoreszenzoptischer Verfahren können im Wesentlichen zwei technische Ausführungsformen unterschieden werden, nämlich eine Messung im Durchlicht (d.h. die Strahlungsquelle (z.B. Lichtquelle) für die Anregungsstrahlung und der Detektor zur Erfassung die Erfassung der Fluoreszenzstrahlung befinden sich an gegenüberliegenden Seiten des Fluorophors) und eine Messung im Rücklicht (d.h. Strahlungsquelle und Detektor befinden sich auf dergleichen Seite bezüglich des Fluorophors).

Im Folgenden soll auf die Messung im Rücklicht Bezug genommen werden und dabei insbesondere auf ein Messsystem, das aus mehreren Messkanälen besteht, d.h. eine identische Anordnung befindet sich linear mehrfach hintereinander. Dabei ergibt sich die Notwendigkeit, optisches Übersprechen *(engl.: Crosstalk)* hinsichtlich der Aspekte des Übersprechens zwischen Anregungsseite und Detektionsseite und des Übersprechens von einem Kanal zu Nachbarkanälen zu minimieren. Eine solche Minimierung von optischem Übersprechen bedeutet in diesem Zusammenhang eine möglichst gute Trennung zweier Signale.

### Stand der Technik

In der US2015182967 wird eine Vorrichtung zur Messung der Fluoreszenz in einer mikrofluidischen Schicht gezeigt. Die mikrofluidische Schicht ist mit einer Leiterplatte verbunden, in der die elektronischen Komponenten der Messvorrichtung, wie zum Beispiel Lichtquelle und Detektor, eingebettet sind. Lichtquelle und Detektor sind dabei in einer oder mehreren Aussparungen des Lichtleiters eingebettet und befinden sich auf derselben Ebene. Die von der Lichtquelle angeregte Fluoreszenz wird von dem Detektor im Rücklicht gemessen.

In der JP2000270156 ist eine Vorrichtung zur Messung des von einer Probe emittierten Fluoreszenzlichts gezeigt. Die Vorrichtung umfasst zwei Lichtquellen, die auf einer Leiterplatte angeordnet sind und einen Detektor, der am Gehäuse der Vorrichtung befestigt ist. Um ein Übersprechen von Strahlung von einer Lichtquelle auf die andere Lichtquelle zu vermeiden, ist in der Leiterplatte ein Spalt vorgesehen. Gleichzeitig lässt der Spalt Fluoreszenzlicht von der Probe zum Detektor gelangen.

In der WO 02/059585 A2 ist eine Messvorrichtung offenbart, die eine Gaskonzentration mit Hilfe von Lumineszenz-Quenching misst. Die Vorrichtung besteht aus einem Luftwegadapter, einer Probenzelle, einem Sensor, der die lumineszenzaktiven Substanzen enthält, einem Wandler (Transducer), der die Anregungslichtquelle und den Detektor enthält, und weiteren Subsystemen zur Temperierung des Sensors und zur Verarbeitung des Detektorsignals. Dabei handelt es sich um ein einkanaliges Messsystem. Anregungslichtquelle und Detektor sind in einem gemeinsamen Block montiert, der auch optische Filter enthält und an einer Leiterplatte befestigt ist. Die Anregungslichtquelle ist schräg gestellt und strahlt unter einem schrägen Winkel in den Block ein. Der mechanische Aufbau gemäß diesem Stand der Technik mit einem Block und schräg gestellter Lichtquelle benötigt allerdings relativ viel Volumen und insbesondere Bauhöhe und ist aufwändig in der Herstellung. Außerdem handelt es sich um ein Messsystem mit nur einem Messkanal, so dass ein Nachbarkanalübersprechen hier nicht auftritt.

In der EP 1 130 382 A2 wird eine Anordnung zum gleichzeitigen Analysieren mehrerer Analyten in einem Fluid beschrieben, wobei mehrere Sensoren mit dem Fluid in Kontakt stehen, eine Lichtquelle und mehrere Detektoren enthalten sind. Ein Prozessor dient zur Auswertung des empfangenen Signals. Es sind jedoch keine speziellen Maßnahmen offenbart, durch die ein Übersprechen von der Anregungs- auf die Detektorseite oder ein Nachbarkanalübersprechen verhindert oder minimiert werden kann.

Die EP 0 793 090 B1 offenbart eine Messanordnung mit einer Strahlungsquelle, einem lumineszenzoptischen Sensorelement, einem Detektor und einem transparenten Trägerelement mit bestimmten Eigenschaften hinsichtlich des Brechungsindex. Durch geeignete Geometrien dieses transparenten Trägerelements kann eine Trennung von Anregungs- und Messstrahlung erreicht werden. Zur Unterdrückung von Nachbarkanalübersprechen wird zusätzlich zur geeigneten Geometrie des Trägerelements eine zeitlich versetzte Aktivierung der jeweils einem Sensorelement zugeordneten Strahlungsquelle beschrieben. Die Trennung von Anregungs- und Messstrahlung erfolgt hier ausschließlich über geeignete Geometrien des transparenten Trägerelements, wobei durch geeignete Ein- und Auskoppelwinkel (z.B. orthogonale Anordnung von Lichtquelle und Detektor) das optische Gesetz der Totalreflexion an Grenzschichten genutzt wird.

Ferner offenbart die EP 1 106 987 A2 eine Messkammer mit einem für die Anregungs-und Messstrahlung teilweise transparenten Basis- und Deckteil mit je einer Längsnut, welche gemeinsam den Messkanal bilden. In verschiedenen Ausführungen werden auch Maßnahmen genannt, die eine Trennung von Anregungs- und Messstrahlung bewirken, vor allem durch geeignete Strahlführung in einem transparenten Trägerelement. Zur optischen Entkopplung zwischen mehreren Messkanälen wird auf bereits bekannte Maßnahmen aus EP 0 793 090 A1 verwiesen. Auch hier beruht die Unterdrückung von Übersprechen zwischen Anregungs- und Messstrahlung auf einer geeigneten geometrischen Ausformung des transparenten Trägerelements. Es sind allerdings keine Maßnahmen zur Unterdrücken eines solchen Übersprechens außerhalb des Trägerelements beschrieben.

Schließlich offenbart die EP 2 380 003 B1 eine Messanordnung zur Bestimmung zumindest eines Parameters einer Blutprobe, wobei der innere Aufbau einer Messzelle und der optischen Elemente so ausgestaltet ist, dass das Anregungslicht ausgehend von den Lichtquellen auf die fluoreszenzoptischen Elemente trifft. Diese emittieren dann jeweils Fluoreszenzstrahlung, welche durch die Durchflussmesszelle tritt, in der sich ein Fluid (Blut oder Spüllösung) befindet, und schließlich auf die Detektoren trifft. Die Anordnung beruht auf dem Prinzip der Messung im Durchlicht, wobei zur Minimierung des Übersprechens die räumliche Trennung von Anregungs- und Messteil genannt wird.

Es sind jedoch keine besonderen Maßnahmen zur Vermeidung von Übersprechen beschrieben.

Gemäß dem Stand der Technik ist somit ein relativ hoher Aufwand bei der Montage der optoelelektronischen Bauelemente erforderlich, z.B. in einem Block zur optischen Trennung. Dies führt zu einer hohen Baugröße, insbesondere Bauhöhe, durch den Montageblock bzw. die räumliche Trennung zwischen Anregungs- und Detektionsseite. Des Weiteren erfordert die optische Trennung zwischen Anregungs- und Detektionssignal eine spezielle Anordnung der optoelektronischen Elemente, z.B. orthogonal, was folglich die Baugröße und die Herstellkosten erhöht. Darüber hinaus erfordert optische Trennung zwischen Anregungs- und Detektionssignal auch eine spezielle Geometrie des Messkanals, was ebenfalls eine Erhöhung der Baugröße und der Herstellkosten zur Folge hat und zudem die Anwendungstauglichkeit verschlechtert.

### Kurzbeschreibung der Erfindung

Der vorliegenden Erfindung liegt u.a. die Aufgabe zugrunde, eine Vorrichtung und ein Verfahren für ein fluoreszenzoptisches Messsystem nach dem Rücklichtprinzip bereitzustellen, mittels denen das optische Übersprechen zwischen Anregungs- und Detektionsseite des Messsystems verringert werden kann, wobei eine einfache Herstellbarkeit und Montage und dadurch geringe Herstellkosten angestrebt sind.

Diese Aufgabe wird gelöst durch eine Wandlervorrichtung nach Patentanspruch 1, ein Messsystem nach Patentanspruch 11 und ein Verfahren nach Patentanspruch 13.

Spezifische vorteilhafte Ausführungsformen der vorliegenden Erfindung sind in den Unteransprüchen angegeben.

Dementsprechend können alle wesentlichen optoelektronischen Elemente und die gesamte Elektronik in einer Ebene und dadurch auf einer Leiterplatte angeordnet werden. Es ist somit keine zweiteilige Ausgestaltung erforderlich, was eine vereinfachte Herstellung und eine einfache Montage der optoelektronischen Elemente zur Folge hat. Ferner können die speziell ausgeformten Elemente und Materialeigenschaften zur Minimierung des optischen Übersprechens zwischen Anregungs- und Detektionsseite und von einem Kanal zu Nachbarkanälen in ohnehin bereits vorhandene Elemente integriert werden, so dass kein Zusatzaufwand entsteht. Insbesondere ist weniger Bauvolumen, insbesondere eine geringere Bauhöhe, erforderlich, was sich vorteilhaft auf die Einsetzbarkeit und Anwenderfreundlichkeit auswirkt (so können z.B. die Abmessungen des am Patienten anzubringenden Messgeräts verringert werden).

Vorzugsweise können die optischen Achsen der Strahlungsquelle und des Detektors im Wesentlichen parallel zueinander verlaufen. Eine solche Gleichausrichtung ermöglicht einen platzsparenden Aufbau der Wandlervorrichtung.

Das strahlungsunterdrückende Element umfasst einen zwischen der Strahlungsquelle und dem Detektor angeordneten Spalt oder Schlitz in einer Leiterplatte, auf der die Strahlungsquelle und der Detektor angeordnet sind. Dadurch kann die in der Leiterplatte auftretende und zu Übersprechen führende Lichtleitung unterdrückt werden.

Dabei weist der Spalt oder Schlitz eine Metallisierung auf einer im Wesentlichen senkrecht zu der gemeinsamen Ebene der Strahlungsquelle und dem Detektor verlaufenden Stirnseite auf. Dies ermöglicht eine noch weitere Verbesserung des Übersprechens durch Unterdrückung geringfügiger den Spalt oder Schlitz überwindender Reststrahlung.

Vorzugsweise kann die Strahlungsquelle die Leiterplatte durchdringen und auf der Unterseite der Leiterplatte angeschlossen sein, wobei der Detektor auf der Oberseite der Leiterplatte angeschlossen sein kann. Dies führt in vorteilhafter Weise zu einer Reduktion der Bauhöhe der Wandlervorrichtung.

Als bevorzugte Ergänzung umfasst die Vorrichtung ein strahlungsunterdrückendes Gehäuse, in dessen Innerem die Strahlungsquelle und der Detektor angeordnet sind, wobei an der Oberseite des Gehäuses über der Strahlungsquelle ein erster strahlungsdurchlässiger Bereich und über dem Detektor ein zweiter strahlungsdurchlässiger Bereich zur Bereitstellung entsprechender Strahlungswege für die Anregungsstrahlung und die zurück emittierte Fluoreszenzstrahlung angeordnet sind. Somit kann in vorteilhafter Weise jegliche Fremdstrahlung aus anderen unerwünschten Richtungen durch das Gehäuse unterdrückt werden.

Als bevorzugte Weiterbildung können der erste und zweite strahlungsdurchlässige Bereich durch entsprechende Öffnungen in dem Gehäuse gebildet sind. Alternativ dazu können der erste und zweite strahlungsdurchlässige Bereich durch entsprechende optische Filterelemente in dem Gehäuse gebildet sein, so dass eine vorteilhafte gezielte Filterung der Anregungs- und Fluoreszenzstrahlung möglich ist.

Als weitere vorteilhafte Weiterbildung kann das strahlungsunterdrückende Gehäuse ein nach unten hervorstehendes Stegelement aufweisen, mittels dem es in den Spalt oder Schlitz der Leiterplatte eingeführt und fixiert ist, auf der die Strahlungsquelle und der Detektor angeordnet sind. Dies ermöglicht eine einfache und genaue Montage des Gehäuses.

Des Weiteren kann das strahlungsunterdrückende Elemente vorzugsweise zumindest ein im Wesentlichen senkrecht zu der Ebene ausgerichtetes Stegelement zur optischen Trennung des Messkanals gegenüber optoelektronischen Bauteilen benachbarter Messkanäle aufweisen. Dadurch kann ein Übersprechen von Nachbarmesskanälen wirksam unterdrückt werden.

Schließlich kann die Vorrichtung zumindest ein auf dem Strahlungsweg der Anregungsstrahlung der Strahlungsquelle oder der von dem Detektor erfassten Fluoreszenzstrahlung angeordnetes Blendenelement mit Öffnungen aufweisen, die so angeordnet sind, dass ein Übersprechen von benachbarten Messkanälen unterdrückt wird. Dabei kann das Blendenelement vorzugsweise aus einer Wärmeleitfolie gebildet sein.

Bei dem Messsystem können die Durchflussmesszellenvorrichtung und die Wandlervorrichtung lösbar miteinander verbunden sein, so dass die Durchflussmesszellenvorrichtung bspw. als austauschbarer Einmalartikel verwendet werden kann.

### Figurenbeschreibung

Im Folgenden werden bevorzugte Ausführungsbeispiele der vorliegenden Erfindung unter Bezugnahme auf die beiliegenden Zeichnungsfiguren näher beschrieben. Es zeigen:
Fig. 1 eine schematische Schnittdarstellung einer Wandlervorrichtung zur Erläuterung des Übersprechproblems, wobei die Wandlervorrichtung nicht unter den Schutzumfang der Ansprüche fällt;
Fig. 2 eine schematische Schnittdarstellung und Draufsicht einer Wandlervorrichtung, welche nicht unter den Schutzumfang der Ansprüche fällt.
Fig. 3 eine schematische Schnittdarstellung und Draufsicht einer Wandlervorrichtung gemäß einem ersten Ausführungsbeispiel;
Fig. 4 eine schematische Schnittdarstellung und Draufsicht einer Wandlervorrichtung gemäß einem zweiten Ausführungsbeispiel;
Fig. 5 eine schematische Schnittdarstellung einer Wandlervorrichtung zur Erläuterung eines weiteren Übersprechproblems;
Fig. 6 eine schematische Schnittdarstellung und Draufsicht einer Wandlervorrichtung gemäß einem dritten Ausführungsbeispiel;
Fig. 7 eine schematische Schnittdarstellung und Draufsicht einer Wandlervorrichtung gemäß einem vierten Ausführungsbeispiel;
Fig. 8 eine schematische Schnittdarstellung einer Wandlervorrichtung zur Erläuterung eines noch weiteren Übersprechproblems, wobei die dargestellte Wandlervorrichtung nicht unter den Schutzumfang der Ansprüche fällt.
Fig. 9 eine schematische Schnittdarstellung und Draufsicht einer Wandlervorrichtung gemäß einem fünften Ausführungsbeispiel;
Fig. 10 eine schematische, Schnittdarstellung und Draufsicht einer Wandlervorrichtung welche nicht unter den Schutzumfang der Ansprüche fällt.
Fig. 11 eine Schnittdarstellung einer Implementierung eines zweiteiligen Messsystems, welche nicht unter den Schutzumfang der Ansprüche fällt; und
Fig. 12 eine Schnittdarstellung einer Implementierung eines zweiteiligen Messsystems, welche nicht unter den Schutzumfang der Ansprüche fällt.

Im Folgenden werden bevorzugte Ausführungsbeispiele der vorliegenden Erfindung am Beispiel eines zweiteiligen Messsystems zur Messung von zumindest einem Blutparameter auf fluoreszenzoptischer Basis beschrieben.

Da das Nutzsignal (Fluoreszenzlicht oder nicht sichtbare Fluoreszenzstrahlung) des Fluorophors um mehrere Größenordnungen (ca. 10³ bis 10⁴) geringer ist als das Anregungssignal (Anregungslicht oder nicht sichtbare Anregungsstrahlung), gilt es Maßnahmen zu entwickeln und umzusetzen, durch die jegliches Übersprechen von Licht oder Strahlung von der Anregungs- auf die Detektionsseite minimiert oder zumindest reduziert werden kann.

Nachfolgend werden zunächst einige Ausführungsbeispiele beschrieben, die u.a. eine Minimierung des Übersprechens von der Anregungs- auf die Detektorseite zum Ziel haben.

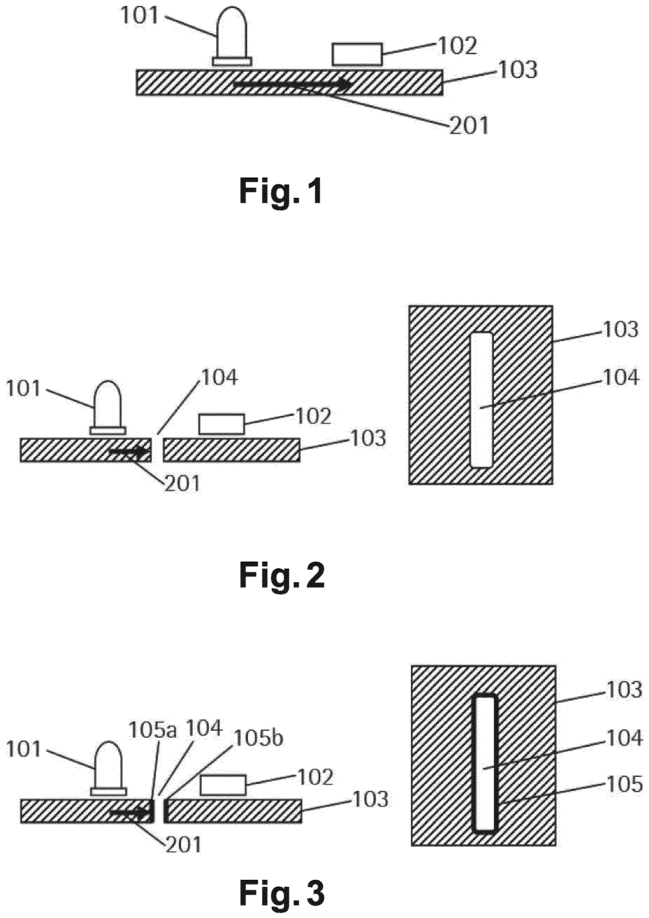

Fig. 1 zeigt eine schematische Schnittdarstellung einer Wandleranordnung oder Wandlervorrichtung zur Erläuterung des Übersprechproblems, wobei die Wandleranordnung oder -vorrichtung nicht unter den Schutzumfang der Ansprüche fällt.

Bei Versuchen mit dem üblicherweise in der Elektronik verwendeten Leiterplattenmaterial (z.B. FR4) hat sich gezeigt, dass innerhalb des Materials eine Lichtleitung stattfinden kann. Ohne besondere Maßnahmen würde das dazu führen, dass Licht, welches auf der Anregungsseite in die Leiterplatte eintritt (z.B. durch Streustrahlung), von der Anregungs- auf die Detektionsseite gelangt und dort im Detektor ein Signal hervorruft, welches sich wiederum mit dem Nutzsignal aus dem Fluorophor überlagert und dadurch die Messgenauigkeit des Gesamtsystems beeinträchtigt.

Fig. 1 zeigt die Problematik in einer Schnittdarstellung mit einer Lichtquelle 101 (z.B. LED, Laserdiode oder anderer elektrooptischer Wandler) und einem Detektor (z.B. Photodiode oder anderer optoelektrischer Wandler), die auf einer Leiterplatte 103 montiert bzw. kontaktiert sind, wobei sich ein unerwünschter Lichtstrahl 201 innerhalb des Leiterplattenmaterials ausbreiten kann.

Fig. 2 zeigt eine schematische Schnittdarstellung (links) und Draufsicht (rechts) einer Wandlervorrichtung, die nicht unter den Schutzumfang der Ansprüche fällt.

Die Leiterplatte 103 weist einen Spalt oder Schlitz 104 zwischen Anregungs- und Detektionsseite aufweist. Dadurch wird die durch den Lichtstrahl 201 hervorgerufene Lichtleitung innerhalb des Leiterplattenmaterials wirksam unterbrochen.

Fig. 3 zeigt eine schematische Schnittdarstellung (links) und Draufsicht (rechts) einer Wandlervorrichtung gemäß einem ersten Ausführungsbeispiel.

Eine weitere Optimierung gemäß dem ersten Ausführungsbeispiel ist möglich, da auch bei der Wandleranordnung gemäß Figur 2 noch ein gewisser Anteil des Anregungslichts in die Leiterplatte eindringt, dort geleitet wird, an der Stirnseite des Schlitzes aus- und auf der gegenüberliegenden Stirnseite wieder eintritt und so auf die Detektionsseite gelangt. Um dies weiter zu reduzieren bzw. gänzlich zu unterbinden, wird als Maßnahme eine Anordnung vorgeschlagen, bei welcher der Schlitz 104 in der Leiterplatte 103 vorzugsweise umlaufend mit einer lichtundurchlässigen Metallisierung 105 versehen wird, wobei dann zwei Metallisierungsbarrieren 105a, 105b auf dem Lichtweg zwischen Lichtquelle 101 und Detektor 102 vorhanden sind. Dies lässt sich sehr kostengünstig dadurch herstellen, dass dafür Verfahren verwendet werden, die in der Leiterplattenherstellung gängig sind, wie z.B. das Einbringen von verkupferten und verzinnten Bohrungen oder Durchkontaktierungen und somit für diese Maßnahme keine Mehrkosten in der Herstellung entstehen.

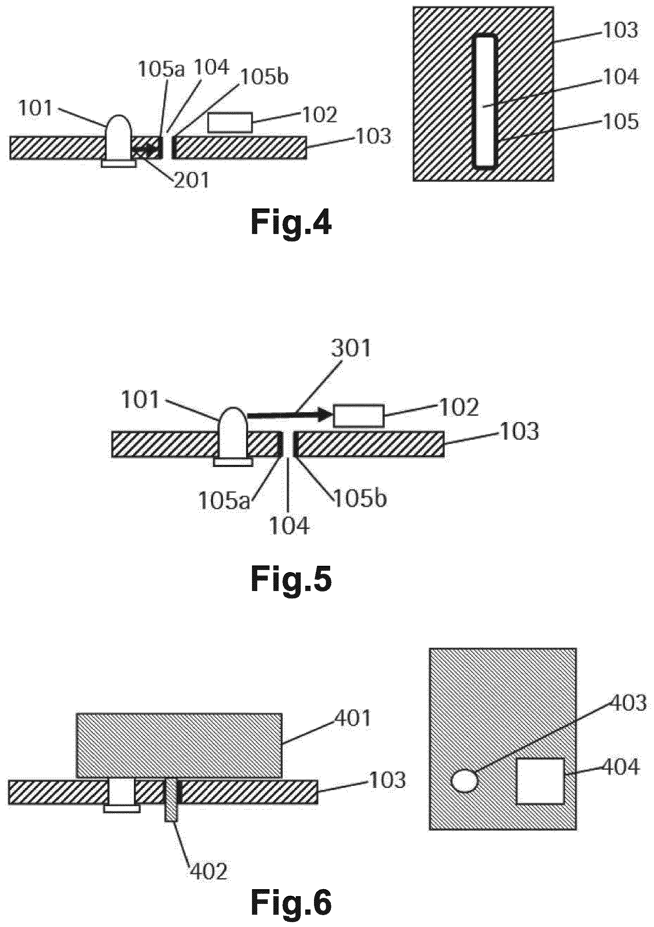

Fig. 4 zeigt eine schematische Schnittdarstellung und Draufsicht einer Wandlervorrichtung gemäß einem zweiten Ausführungsbeispiel.

Als weitere Optimierung können gemäß dem zweiten Ausführungsbeispiel hohe Bauteile, wie die Lichtquelle 101 (z.B. LED), anstatt auf der Leiterplatte 103 montiert, durch die Leiterplatte 103 durchgesteckt und auf der Unterseite kontaktiert werden. Dadurch wird die Gesamtdicke reduziert, was dem Ziel einer geringen Bauhöhe des gesamten Messsystems und dadurch einer verbesserten Anwendbarkeit *(engl.: Usability)* und Nutzerfreundlichkeit dient.

Nach der Minimierung des Übersprechens von Licht von der Anregungs- auf die Detektionsseite innerhalb der Leiterplatte werden in den folgenden Ausführungsbeispielen Lösungen beschrieben zur Minimierung des Übersprechens außerhalb der Leiterplatte.

Fig. 5 zeigt eine weitere Übersprechproblematik in einer Schnittdarstellung der Wandlervorrichtung.

Ohne besondere weitergehende Maßnahmen würde es sich in den vorhergehenden Ausführungsbeispielen ergeben, dass Licht, welches auf der Anregungsseite z.B. als Streustrahlung entsteht, von der Anregungs- auf die Detektionsseite gelangt und dort im Detektor 102 ein Signal hervorruft, welches sich mit dem Nutzsignal aus dem Fluorophor überlagert und dadurch die Messgenauigkeit beeinträchtigt. Dieses unerwünschte Streulicht ist durch den Lichtstrahl 301 in Fig. 5 symbolisiert.

Fig. 6 zeigt eine schematische Schnittdarstellung (links) und Draufsicht (recht) einer Wandlervorrichtung gemäß einem dritten Ausführungsbeispiel.

Zur Lösung wird gemäß dem dritten Ausführungsbeispiel ein gehäuseförmiges Bauteil (nachfolgend Gehäuse genannt) 401 vorgeschlagen, welches dazu dient, optische Filter aufzunehmen und zu fixieren, und das derart ausgeformt ist, dass es diesem Ziel der Unterdrückung von Übersprechen dient.

Das Gehäuse (Filterrahmen) 401 besteht aus lichtundurchlässigem Material (vorzugsweise ausgeführt als Kunststoffspritzgussteil), wird im vorliegenden dritten Ausführungsbeispiel auf die Leiterplatte 103 gesetzt und taucht optional mit einem stegförmigen Fortsatz oder Steg 402 durch den Schlitz 104 der Leiterplatte 103 hindurch. Dadurch wird jeglicher noch verbleibender Lichtweg zwischen Anregungs-und Detektionsseite unterbunden und ein dadurch hervorgerufenes Übersprechen unterdrückt.

An der Oberseite des Gehäuses 401 sind oberhalb der Lichtquelle 101 und des Detektors 102 zugehörige und die Bedürfnisse des Anregungslichts und des Fluoreszenzlichts angepasste Öffnungen 403 und 404 vorgesehen. Die über dem Detektor 102 angeordnete Öffnung 404 kann größer ausgestaltet sein, um mehr Fluoreszenzlicht einzufangen. Die Öffnungen 403, 404 für die Lichtquelle 101 und für den Detektor 102 sind vorzugsweise so geformt, dass diese vom Gehäuse 401 umschlossen werden und dadurch auch an dieser Stelle jeglicher Lichtweg zwischen Anregungs- und Detektionsseite wirksam unterbunden wird.

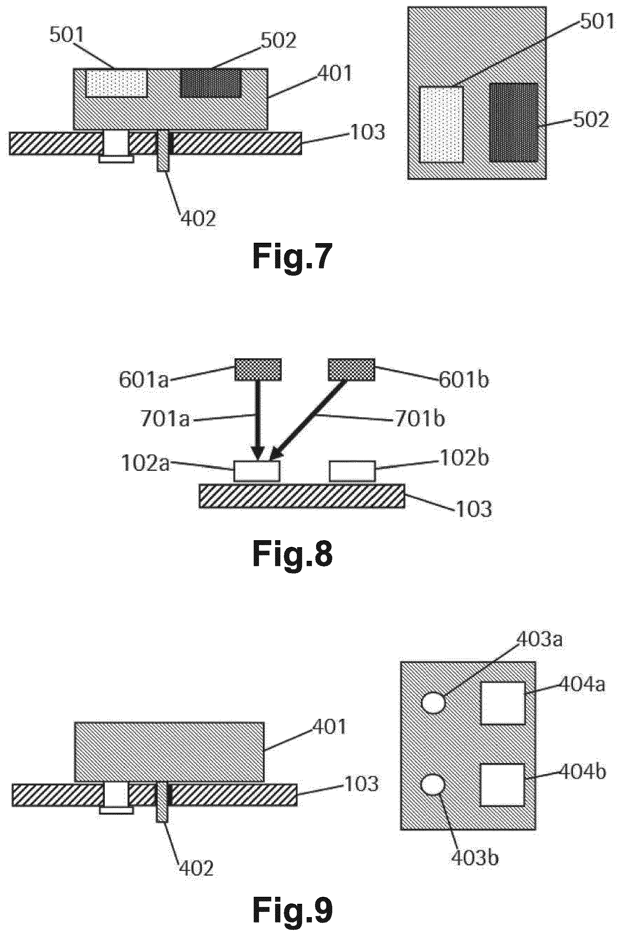

Fig. 7 zeigt eine schematische Schnittdarstellung (links) und Draufsicht (rechts) einer Wandlervorrichtung gemäß einem vierten Ausführungsbeispiel.

Gemäß dem vierten Ausführungsbeispiel weist das Gehäuse 401 Konturen auf, in die optische Filter 501 und 502 auf der Anregungs- und der Detektionsseite aufgenommen und fixiert werden können. Auch hier können beide Seiten in der Leiterplatte 103 durch einen lichtundurchlässigen Steg 402 voneinander getrennt sein. Auch im Innern des als Filterhalter dienenden Gehäuses 401 kann ein lichtundurchlässiger Steg zwischen Lichtquelle 101 und Detektor 102 angeordnet sein.

Es folgen nun noch Ausführungsbeispiele zur Minimierung oder zumindest Unterdrückung des Übersprechens von einem Messkanal zu Nachbarmesskanälen.

Fig. 8 zeigt eine schematische Schnittdarstellung einer Wandlervorrichtung zur Erläuterung eines noch weiteren durch Nachbarmesskanäle hervorgerufenen Übersprechproblems, wobei dieses Ausführungsbeispiel nicht unter den Schutzumfang der Ansprüche fällt. Dargestellt sind hier nur die Detektionsseiten zweier benachbarter Messkanäle.

Bei Versuchen hat sich gezeigt, dass Anregungslicht nicht nur auf einen damit beleuchteten Fluorophor 601a trifft und diesen anregt, sondern in gewissem Maße auch auf Fluorophore 601b benachbarter Messkanäle, so dass deren Fluoreszenzlicht 701b nicht nur auf den dortigen Nachbardetektor 102b, sondern auch auf den Detektor 102a des ursprünglichen Messkanals trifft. Ohne besondere Maßnahmen würde das dazu führen, dass Licht, welches den Detektor 102a eines Messkanals trifft, ein Mischprodukt aus mehreren Fluorophoren 601a, 601b benachbarter Messkanäle ist, wodurch die Messgenauigkeit beeinträchtigt wird.

Dabei stellt in dem in Fig. 8 gezeigten Beispiel der Fluoreszenzlichtstrahl 701a das Nutzsignal dar. Es ist dabei sowohl unerwünscht, dass der Nachbarfluorophor 601b durch Anregungslicht des Nachbarkanals angeregt wird, als auch, dass Fluoreszenzlicht 701b den Nachbardetektor 102a trifft.

Fig. 9 zeigt eine schematische Schnittdarstellung (links) und Draufsicht (rechts) einer Wandlervorrichtung gemäß einem fünften Ausführungsbeispiel.

Zur Lösung gemäß dem fünften Ausführungsbeispiel wird das bereits oben verwendete Gehäuse 401 mit oberhalb der Lichtquelle und des Detektors angeordneten Öffnungen 403a, 403b, 404a und 404b zur optionalen Aufnahme und Fixierung optischer Filter dadurch erweitert, dass eine Separation der optoelektronischen Bauteile benachbarter Kanäle durch geeignete, im Wesentlichen senkrecht zur Oberfläche der Leiterplatte 103 ausgerichtete Stege (nicht gezeigt) zwischen den Messkanälen vorgesehen ist, so dass Nachbarkanalübersprechen verringert wird.

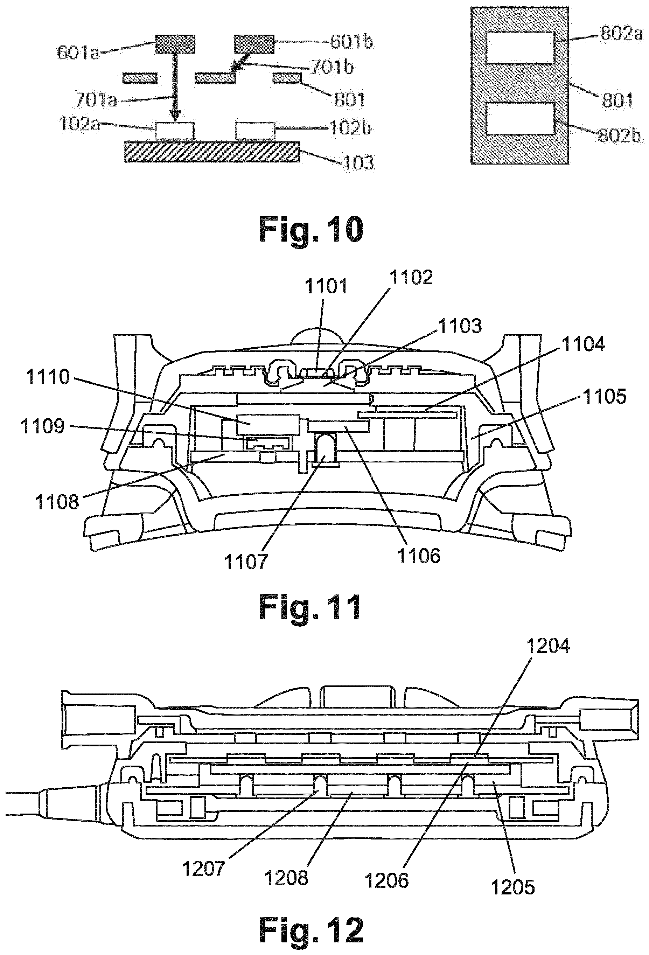

Fig. 10 zeigt eine schematische Schnittdarstellung (links) und Draufsicht (rechts) einer Wandlervorrichtung, die nicht unter den Schutzumfang der Ansprüche fällt. Dargestellt sind nur die Detektionsseiten zweier benachbarter Kanäle (links) und die Wärmeleitfolie in der Draufsicht (rechts).

Als weitere Optimierung wird eine flächige Blende 801 vorgeschlagen, welche auf dem Lichtweg von der Lichtquelle (nicht gezeigt) zum Fluorophor 601a, 601b und von diesem zurück zum Detektor 102a, 102b in der Nähe des Fluorophors 601a, 601b, aber noch innerhalb des wiederverwendbaren Teils des Messsystems, angeordnet ist. Diese Blende 801 kann vorzugsweise so ausgeformt sein, dass geeignete Öffnungen 802a, 802b ein Nachbarkanalübersprechen verhindern.

Gemäß einer vorteilhaften und besonders kostensparenden Ausführung besteht diese Blende aus einer Wärmeleitfolie, welche aus Gründen der Thermostatisierung des Messsystems bereits im Bereich der Schnittstelle zwischen Einmalartikel und wiederverwendbarem Teil vorhanden ist. Dadurch entfällt ein zusätzliches Bauteil und das schon vorhandene Bauteil erhält neben der thermischen eine zusätzliche optische Funktion.

Die o.g. Darstellungen gemäß den Figuren 8 bis 10 zeigen schematisch die Gegebenheiten bei zwei Messkanälen. Es ist offensichtlich, dass sich alle Maßnahmen ebenso wirksam auf ein System mit mehr Messkanälen anwenden lassen.

Die in den vorstehend beschriebenen Ausführungsbeispielen beschriebenen Maßnahmen können individuell oder beliebig kombiniert in einem mehrkanaligen Messsystem realisiert werden.

Nachfolgend werden zwei beispielhafte Implementierungen bei einem zweiteiligen Messsystem unter Bezugnahme auf die Figuren 11 und 12 unter Berücksichtigung realer Größenverhältnisse beschrieben, die nicht unter den Schutzumfang der Ansprüche fallen.

Fig. 11 zeigt eine Schnittdarstellung einer Implementierung eines zweiteiligen Messsystems mit einem Messkanal und verringertem Übersprechen, welche nicht unter den Schutzumfang der Ansprüche fällt.

Dargestellt ist ein Querschnitt durch ein Messsystem, wobei im oberen Teil eine als Einmalartikel ausgebildete Durchflussmessvorrichtung und im unteren Teil eine als wiederverwendbares Teil ausgebildete Wandlervorrichtung gezeigt sind. Man erkennt im oberen Teil einen Messkanal 1101 mit darin enthaltenem, zu messenden Fluid und einen Sensorspot 1102, auf den das Anregungslicht über eine prismaförmige Optik 1103 gelenkt wird. Im unteren Teil befindet sich die Leiterplatte 1108 mit durchgeführter Lichtquelle (z.B. LED) 1107, der Detektor (z.B. Photodiode) 1109, die optische Filter 1106 und 1110 und der Filterrahmen 1105.

Fig. 12 zeigt eine Schnittdarstellung einer Implementierung eines zweiteiligen Messsystems mit vier Messkanälen und verringertem Übersprechen, welche nicht unter den Schutzumfang der Ansprüche fällt.

Im Längsschnitt kann man wieder im oberen Teil die als Einmalartikel ausgebildete Durchflussmessvorrichtung und im unteren Teil die wiederverwendbare Wandlervorrichtung erkennen. Des Weiteren sind im unteren Teil die Leiterplatte 1208 mit durchgeführten Lichtquellen 1207 (z.B. LEDs), optische Anregungsfilter 1206, der Filterrahmen 1205 und die Wärmeleitfolie 1204 unmittelbar oberhalb der optischen Anregungsfilter 1206 zu erkennen.

Abschließend ist noch anzumerken, dass die vorliegende Erfindung selbstverständlich auch zur Messung anderer Fluidparameter in anderen Fluiden eingesetzt werden kann. Auch eine Verwendung von Strahlung außerhalb des Lichtwellenlängenbereichs ist durchaus denkbar.

## Patentansprüche

1. Wandlervorrichtung zur Messung von zumindest einem Fluidparameter eines in einer Durchflussmesszelle befindlichen Fluids, bestehend aus einer Leiterplatte (103), einer Strahlungsquelle (101) zum Erzeugen einer Anregungsstrahlung und einem auf derselben Ebene wie die Strahlungsquelle (101) angeordneten Detektor (102; 102a) zum Erfassen einer durch die Anregungsstrahlung in der Durchflussmesszelle angeregten und zurück reflektierten Fluoreszenzstrahlung nach Durchströmen der Durchflussmesszelle, wobei die Strahlungsquelle (101) und der Detektor (102) auf der Leiterplatte angeordnet sind, gekennzeichnet, dass ein strahlungsunterdrückendes Element einen zwischen der Strahlungsquelle (101) und dem Detektor (102) angeordneten Spalt oder Schlitz (104) in der Leiterplatte (103) umfasst, welches in der Leiterplatte (103) auftretende und zu Übersprechen führende Lichtleitung unterdrückt, wobei
der Spalt oder Schlitz (104) eine Metallisierung (105) auf einer im Wesentlichen senkrecht zu der gemeinsamen Ebene der Strahlungsquelle (101) und dem Detektor (102) verlaufenden Stirnseite aufweist.

2. Vorrichtung nach Anspruch 1, wobei die optischen Achsen der Strahlungsquelle (101) und des Detektors (102; 102a) im Wesentlichen parallel zueinander verlaufen.

3. Vorrichtung nach Anspruch 2, wobei die Strahlungsquelle (101) die Leiterplatte (103) durchdringt und auf der Unterseite der Leiterplatte (103) angeschlossen ist, und wobei der Detektor (102; 102a) auf der Oberseite der Leiterplatte (103) angeschlossen ist.

4. Vorrichtung nach einem der vorgenannten Ansprüche, welche ferner ein strahlungsunterdrückendes Gehäuse (401) umfasst, in dessen Innerem die Strahlungsquelle (101) und der Detektor (102) angeordnet sind, wobei an der Oberseite des Gehäuses (401) über der Strahlungsquelle (101) ein erster strahlungsdurchlässiger Bereich (403) und über dem Detektor (102) ein zweiter strahlungsdurchlässiger Bereich (404) zur Bereitstellung entsprechender Strahlungswege für die Anregungsstrahlung und die zurück reflektierte Fluoreszenzstrahlung angeordnet sind.

5. Vorrichtung nach Anspruch 4, wobei der erste und zweite strahlungsdurchlässige Bereich durch entsprechende Öffnungen (403, 404) in dem Gehäuse (401) gebildet sind.

6. Vorrichtung nach Anspruch 5, wobei der erste und zweite strahlungsdurchlässige Bereich durch entsprechende optische Filterelemente (501, 502) in dem Gehäuse (401) gebildet sind.

7. Vorrichtung nach einem der Ansprüche 4 bis 6, wobei das strahlungsunterdrückende Gehäuse (401) ein nach unten hervorstehendes Stegelement (402) aufweist, mittels dem es in einen Spalt oder Schlitz (104) einer Leiterplatte (103) eingeführt und fixiert ist, auf der die Strahlungsquelle (101) und der Detektor (102) angeordnet sind.

8. Vorrichtung nach einem der vorhergehenden Ansprüche, welche ferner ein im Wesentlichen senkrecht zu der Ebene, in der die Strahlungsquelle (101) und der Detektor (102) angeordnet sind, ausgerichtetes Stegelement zur optischen Trennung gegenüber optoelektronischen Bauteilen benachbarter Messkanäle aufweist.

9. Vorrichtung nach einem der vorgenannten Ansprüche, welche zumindest ein auf dem Strahlungsweg der Anregungsstrahlung der Strahlungsquelle (101) oder der von dem Detektor (102) erfassten Fluoreszenzstrahlung angeordnetes Blendenelement (801) mit Öffnungen (802a, 802b) aufweist, die so angeordnet sind, dass ein Übersprechen von benachbarten Messkanälen unterdrückt wird.

10. Vorrichtung nach Anspruch 9, wobei das Blendenelement (801) aus einer Wärmeleitfolie gebildet ist.

11. Messsystem mit einer Wandlervorrichtung nach einem der Ansprüche 1 bis 10, und einer Durchflussmesszellenvorrichtung mit einer Durchflussmesszelle zur Aufnahme eines Fluids, und einer Fluoreszenzquelle (601a), die durch die Anregungsstrahlung von der Strahlungsquelle (101) anregbar ist, wobei die Fluoreszenzquelle (601a) so angeordnet ist, dass zumindest ein Teil der bei einer Anregung der Fluoreszenzquelle (601a) von dieser abgegebenen Fluoreszenzstrahlung die Durchflussmesszelle durchströmt.

12. Messsystem nach Anspruch 11, wobei die Durchflussmesszellenvorrichtung und die Wandlervorrichtung lösbar miteinander verbunden sind.

13. Verfahren zum Messen von zumindest einem Fluidparameter, wobei das Verfahren umfasst:
- Erzeugen einer Anregungsstrahlung mittels einer Strahlungsquelle (101);
- Erfassen einer durch die Anregungsstrahlung in einer Durchflussmesszelle angeregten und zurück emittierten Fluoreszenzstrahlung nach Durchströmen der Durchflussmesszelle mit einem auf derselben Ebene wie die Strahlungsquelle (101) angeordneten Detektor (102; 102a); wobei die Strahlungsquelle (101) und der Detektor (102) auf der Leiterplatte (103) angeordnet sind, **gekennzeichnet durch**
- Unterdrücken von in der Leiterplatte auftretender und zu Übersprechen führender Lichtleitung zwischen der Strahlungsquelle (101) und dem Detektor (102), in dem als strahlungsunterdrückendes Element ein zwischen der Strahlungsquelle (101) und dem Detektor (102) angeordneter Spalt oder Schlitz (104) in der Leiterplatte (103) vorgesehen ist, wobei
der Spalt oder Schlitz (104) eine Metallisierung (105) auf einer im Wesentlichen senkrecht zu der gemeinsamen Ebene der Strahlungsquelle (101) und dem Detektor (102) verlaufenden Stirnseite aufweist.

## Claims

1. A converter device for measuring at least one fluid parameter of a fluid located in a flow measuring cell, consisting of a printed circuit board (103), a light source (101) for generating an excitation radiation and a detector (102; 102a) arranged on the same plane as the light source (101) for detecting a fluorescence radiation excited by the excitation radiation in the flow measuring cell and reflected back after flowing through the flow measuring cell, wherein the light source (101) and the detector (102) are arranged on the printed circuit board, **characterized in that**
a radiation suppressing element comprises a gap or slit (104) in the printed circuit board (103) arranged between the light source (101) and the detector (102), said radiation suppressing element suppressing conduction of light occurring in the printed circuit board (103) and leading to crosstalk, wherein
the gap or slit (104) has a metallization (105) on an end face extending substantially perpendicular to the common plane of the light source (101) and the detector (102).

2. The device according to claim 1, wherein the optical axes of the light source (101) and of the detector (102; 102a) are substantially parallel to each other.

3. The device according to claim 2, wherein the light source (101) penetrates the printed circuit board (103) and is connected on the bottom side of the printed circuit board (103), and wherein the detector (102; 102a) is connected on the top side of the printed circuit board (103).

4. The device according to one of the preceding claims, further comprising a radiation suppressing housing (401) in the interior of which the light source (101) and the detector (102) are arranged, wherein a first radiation permeable area (403) is arranged on the top side of the housing (401) above the light source (101) and a second radiation permeable area (404) is arranged above the detector (102) for providing respective radiation paths for the excitation radiation and the back reflected fluorescence radiation.

5. The device according to claim 4, wherein the first and second radiation permeable areas are formed by respective openings (403, 404) in the housing (401).

6. The device according to claim 5, wherein the first and second radiation permeable areas are formed by respective optical filter elements (501, 502) in the housing (401).

7. The device according to one of claims 4 to 6, wherein the radiation suppressing housing (401) comprises a web element (402) projecting downward, via which it is inserted and fixed in a gap or slit (104) of a printed circuit board (103) on which the light source (101) and the detector (102) are arranged.

8. The device according to one of the preceding claims, further comprising a web element oriented substantially perpendicular to the plane in which the light source (101) and the detector (102) are arranged for optical separation with respect to optoelectronic components of adjacent measurement channels.

9. The device according to one of the preceding claims, which comprises at least one aperture element (801) arranged on the radiation path of the excitation radiation of the light source (101) or of the fluorescence radiation detected by the detector (102) and having openings (802a, 802b) arranged to suppress crosstalk from adjacent measurement channels.

10. The device according to claim 9, wherein the aperture member (801) is formed of a heat conductive foil.

11. A measuring system comprising a converter device according to one of claims 1 to 10, and a flow measuring cell device comprising a flow measuring cell for receiving a fluid, and a fluorescence source (601a) excitable by the excitation radiation from the light source (101), wherein the fluorescence source (601a) is arranged such that at least a part of the fluorescence radiation emitted from the fluorescence source (601a) upon excitation thereof flows through the flow measuring cells.

12. The measuring system according to claim 11, wherein the flow measuring cell device and the converter device are detachably connected to each other.

13. A method for measuring at least one fluid parameter, wherein the method comprises:
- generating an excitation radiation via a light source (101);
- detecting fluorescence radiation excited and re-emitted by the excitation radiation in a flow measuring cell after flowing through the flow measuring cell with a detector (102; 102a) arranged on the same plane as the light source (101); wherein the light source (101) and the detector (102) are arranged on the printed circuit board (103), **characterized by**
- suppressing conduction of light occurring in the printed circuit board and leading to crosstalk between the light source (101) and the detector (102), wherein a gap or slit (104) arranged between the light source (101) and the detector (102) is provided in the printed circuit board (103) as a radiation-suppressing element, wherein
the gap or slit (104) has a metallization (105) on an end face extending substantially perpendicular to the common plane of the light source (101) and the detector (102).

## Revendications

1. Dispositif transducteur permettant de mesurer au moins un paramètre de fluide d'un fluide se trouvant dans une cellule de mesure de débit, consistant en une carte de circuit imprimé (103), une source de rayonnement (101) permettant de générer un rayonnement d'excitation et un détecteur (102 ; 102a) agencé sur le même plan que la source de rayonnement (101) et permettant de détecter un rayonnement de fluorescence, excité au sein de la cellule de mesure de débit grâce au rayonnement d'excitation et réfléchi, après qu'il a traversé la cellule de mesure de débit, dans lequel la source de rayonnement (101) et le détecteur (102) sont agencés sur la carte de circuit imprimé,
**caractérisé en ce qu'**
un élément suppresseur de rayonnement comprend dans la carte de circuit imprimé (103) un espace ou une fente (104) agencé(e) entre la source de rayonnement (101) et le détecteur (102), lequel supprime la conduction de lumière se produisant dans la carte de circuit imprimé (103) et entrainant une diaphonie, dans lequel
l'espace ou la fente (104) présente une métallisation (105) sur une face d'extrémité s'étendant de manière sensiblement perpendiculaire au plan commun de la source de rayonnement (101) et au détecteur (102).

2. Dispositif selon la revendication 1, dans lequel les axes optiques de la source de rayonnement (101) et du détecteur (102; 102a) sont sensiblement parallèles l'un à l'autre.

3. Dispositif selon la revendication 2, dans lequel la source de rayonnement (101) pénètre dans la carte de circuit imprimé (103) et est raccordée sur la face inférieure de la carte de circuit imprimé (103), et dans lequel le détecteur (102 ; 102a) est raccordé sur la face supérieure de la carte de circuit imprimé (103).

4. Dispositif selon l'une quelconque des revendications précédentes, qui comprend en outre un boîtier suppresseur de rayonnement (401) à l'intérieur duquel sont agencés la source de rayonnement (101) et le détecteur (102), dans lequel, au niveau de la face supérieure du boîtier (401), une première région (403) perméable au rayonnement est agencée au-dessus de la source de rayonnement (101) et une seconde région (404) perméable au rayonnement est agencée au-dessus du détecteur (102), afin de fournir des trajets de rayonnement correspondants pour le rayonnement d'excitation et le rayonnement de fluorescence réfléchi.

5. Dispositif selon la revendication 4, dans lequel les première et seconde régions perméables au rayonnement sont formées grâce à des orifices (403, 404) correspondants dans le boîtier (401).

6. Dispositif selon la revendication 5, dans lequel les première et seconde régions perméables au rayonnement sont formées grâce à des éléments filtrants optiques (501, 502) correspondants dans le boîtier (401).

7. Dispositif selon l'une quelconque des revendications 4 à 6, dans lequel le boîtier suppresseur de rayonnement (401) présente un élément formant talon (402) faisant saillie vers le bas et au moyen duquel il est inséré et fixé dans un espace ou une fente (104) d'une carte de circuit imprimé (103) sur laquelle sont agencés la source de rayonnement (101) et le détecteur (102).

8. Dispositif selon l'une quelconque des revendications précédentes, qui présente en outre un élément formant talon orienté de manière sensiblement perpendiculaire au plan dans lequel la source de rayonnement (101) et le détecteur (102) sont agencés et permettant une séparation optique par rapport à des composants optoélectroniques de canaux de mesure voisins.

9. Dispositif selon l'une quelconque des revendications précédentes, qui présente au moins un élément formant diaphragme (801) agencé sur le trajet de rayonnement du rayonnement d'excitation de la source de rayonnement (101) ou du rayonnement fluorescent détecté par le détecteur (102) et muni d'orifices (802a, 802b) agencés de sorte qu'une diaphonie provenant de canaux de mesure voisins est supprimée.

10. Dispositif selon la revendication 9, dans lequel ledit élément formant diaphragme (801) est formé d'un film conducteur de chaleur.

11. Système de mesure comprenant un dispositif transducteur selon l'une quelconque des revendications 1 à 10 et un dispositif formant cellule de mesure de débit muni d'une cellule de mesure de débit permettant d'accueillir un fluide, et une source de fluorescence (601a) pouvant être excitée grâce au rayonnement d'excitation de la source de rayonnement (101), dans lequel la source de fluorescence (601a) est agencée de sorte qu'au moins une partie du rayonnement de fluorescence émis par ladite source de fluorescence (601a) lors d'une excitation de celle-ci traverse la cellule de mesure de débit.

12. Système de mesure selon la revendication 11, dans lequel le dispositif formant cellule de mesure de débit et le dispositif transducteur sont reliés l'un à l'autre de manière amovible.

13. Procédé de mesure d'au moins un paramètre de fluide, dans lequel le procédé comprend les étapes consistant à :
- générer un rayonnement d'excitation au moyen d'une source de rayonnement (101) ;
- détecter, avec un détecteur (102 ; 102a) agencé sur le même plan que la source de rayonnement (101), un rayonnement de fluorescence excité grâce au rayonnement d'excitation au sein d'une cellule de mesure de débit et réfléchi, après qu'il a traversé la cellule de mesure de débit ; dans lequel la source de rayonnement (101) et le détecteur (102) sont agencés sur la carte de circuit imprimé (103), **caractérisé par** l'étape consistant à
- supprimer, entre la source de rayonnement (101) et le détecteur (102), la conduction de lumière se produisant dans la carte de circuit imprimé et entrainant une diaphonie, en fournissant dans la carte de circuit imprimé (103), en tant qu'élément suppresseur de rayonnement, un espace ou une fente (104) agencé(e) entre la source de rayonnement (101) et le détecteur (102), dans lequel
l'espace ou la fente (104) présente une métallisation (105) sur une face d'extrémité s'étendant de manière sensiblement perpendiculaire au plan commun de la source de rayonnement (101) et au détecteur (102).
